# EUROPEAN PATENT SPECIFICATION

(11) **EP 3 513 936 B1**
(45) Date of publication and mention of the grant of the patent: **19.05.2021**
(21) Application number: 18211509.7
(22) Date of filing: 11.12.2018
(51) Int. Cl.: B29B 11/14, B29L 9/00, B29C 49/22, B29C 49/02, B29L 31/00, B32B 7/06, B65D 83/00, B67D 1/04, B41J 2/175, B67D 1/08, B32B 7/04, B29B 11/08

(54) **BLOWN BOTTLE**
BLASGEFORMTE FLASCHE
BOUTEILLE SOUFFLÉE

(30) Priority: 22.01.2018 JP 2018008171
(43) Date of publication of application: 24.07.2019
(73) Proprietor: CANON KABUSHIKI KAISHA, Ohta-ku Tokyo 146-8501 (JP)
(72) Inventor: FUKUSHIMA, Takashi, Tokyo, 146-8501 (JP); OHASHI, Tetsuya, Tokyo, 146-8501 (JP); INOUE, Ryoji, Tokyo, 146-8501 (JP); MURAKAMI, Hironori, Tokyo, 146-8501 (JP); MIYASHITA, Takeho, Tokyo, 146-8501 (JP); NAGAOKA, Kyosuke, Tokyo, 146-8501 (JP); KOTAKI, Yasuo, Tokyo, 146-8501 (JP); KANNO, Kenichi, Tokyo, 146-8501 (JP)
(74) Representative: TBK

(56) References cited:
- WO-A2-2012/083310
- WO-A2-2014/017907
- US-A1- 2016 375 608

## Description

### BACKGROUND OF THE INVENTION

### Field of the Disclosure

The present disclosure relates to a blown bottle, an ink cartridge, and a method for manufacturing a blown bottle.

### Description of the Related Art

Injection blow molding such as discussed in Japanese Patent Application Laid-Open No. 2017-113933 has been known as a kind of molding method. In injection blow molding, a test tube-shaped preform is first molded. The preform is then molded into a desired shape by blowing air into the heated preform, and pressing the inflated preform against the inner surface of a mold. A blow molded bottle according to the preamble of claim 1 is known from WO 2012/083310 A2. Further examples of blow molded bottles are disclosed in WO 2014/017907 A2 and US 2016/375608 A1.

In injection blow molding, a heated preform is molded into a desired shape by longitudinally stretching the heated preform with a stretch rod and then laterally stretching and inflating the preform with pressurized air. According to a study made by the present inventors, if a material having a low heat resistance or low crystallinity is subjected to injection blow molding, deformation may occur in the molded article (post-molding shrinkage) due to stress relaxation of strain caused by the stretching, and the article may fail to provide a needed shape. In particular, if a two-layer preform is subjected to blow molding and a welding rib is arranged on a portion that deforms, welding is unable to be performed as designed. This can result in weak welding or occurrence of leakage from that portion.

### SUMMARY

It is an object of the present invention to suppress the occurrence of deformation due to post-molding shrinkage after injection blow molding of a two-layer preform.

According to the present invention, the above object is solved by a blow molded bottle comprising the features of claim 1. Further embodiments are defined in further claims 2 to 13.

Further features of the present disclosure will become apparent from the following description of exemplary embodiments with reference to the attached drawings.

### BRIEF DESCRIPTION OF THE DRAWINGS

Figs. 1A, 1B, and 1C are diagrams illustrating a configuration of an ink cartridge, according to one or more embodiment of the subject disclosure.
Figs. 2A, 2B, and 2C are diagrams illustrating a configuration of a preform, according to one or more embodiment of the subject disclosure.
Figs. 3A and 3B are diagrams illustrating a configuration of a casing of the ink cartridge, according to one or more embodiment of the subject disclosure.
Figs. 4A and 4B are diagrams illustrating a configuration of flanges, according to one or more embodiment of the subject disclosure.
Figs. 5A and 5B are diagrams illustrating a configuration of a joint member and a welding rib thereof, according to one or more embodiment of the subject disclosure.
Figs. 6A and 6B are diagrams illustrating configurations of the flanges, according to one or more embodiment of the subject disclosure.
Figs. 7A, 7B, and 7C are diagrams illustrating a configuration of a casing and flanges, according to one or more embodiment of the subject disclosure.
Figs. 8A, 8B, and 8C are diagrams illustrating a configuration of a casing and flanges, according to one or more embodiment of the subject disclosure.
Figs. 9A, 9B, and 9C are diagrams illustrating a configuration of a casing and flanges, according to one or more embodiment of the subject disclosure.
Figs. 10A, 10B, and 10C are diagrams illustrating a configuration of a casing and flanges, according to one or more embodiment of the subject disclosure.
Figs. 11A and 11B are diagrams illustrating a configuration of a casing and flanges, according to one or more embodiment of the subject disclosure.
Figs. 12A, 12B, and 12C are diagrams illustrating a configuration of a casing and flanges, according to one or more embodiment of the subject disclosure.

### DESCRIPTION OF THE EMBODIMENTS

A blown bottle according to an exemplary embodiment of the present disclosure will be concretely described by using an ink cartridge that is an example of the blown bottle. The blown bottle according to the present exemplary embodiment is not limited to an ink cartridge. For example, the blown bottle according to the present exemplary embodiment can be used as a food or drink container or a medicine container.

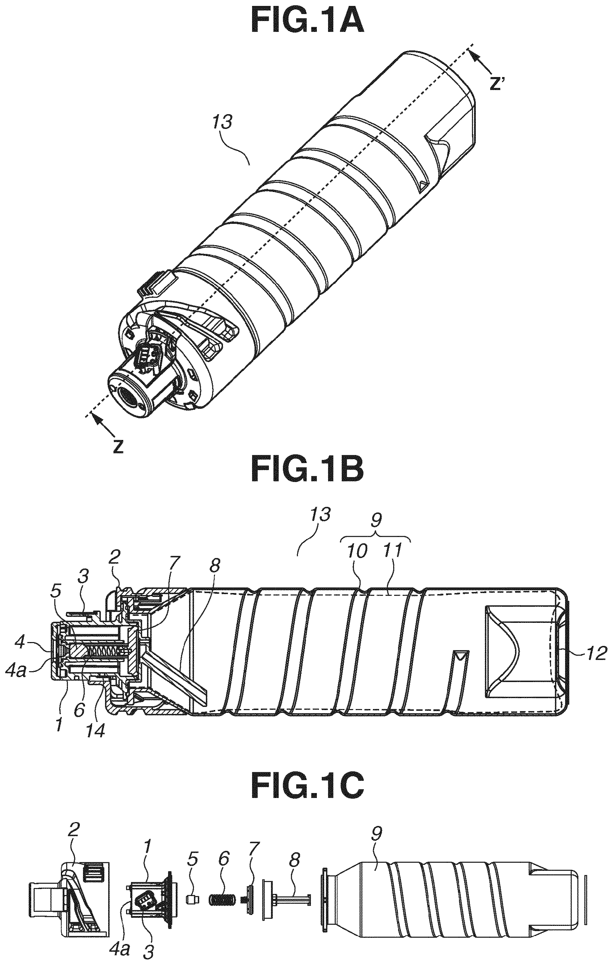

Figs. 1A, 1B, and 1C illustrate an example of the ink cartridge. Fig. 1A is a perspective view of the ink cartridge. Fig. 1B is a sectional view of the ink cartridge, taken along the line Z-Z' of Fig. 1A. Fig. 1C is an exploded view of the ink cartridge. An ink cartridge 13 includes a joint member 1, a cover member 2, a supply port valve 5, a spring 6, an air check valve 7, an ink channel member 8, and a casing 9. An insert portion 4 into which an ink reception pipe (not illustrated) is inserted is provided at the end of the joint member 1. A sealing member 4a having an opening is provided on the insert portion 4. The insert portion 4 is sealed by biasing the supply port valve 5 toward the opening with the spring 6 except when the ink cartridge 13 is attached to a recording apparatus. Examples of material forming the sealing member 4a include rubber and other elastomers. On the other end of the spring 6, the air check valve 7 closes off the internal space of the joint member 1 from the interior of the casing 9. The air check valve 7 is arranged to prevent backflow of air in a process of bleeding air from the casing 9 into which ink has been injected in a manufacturing process of the ink cartridge 13. Examples of material forming the air check valve 7 include polyethylene (PE), polypropylene (PP), and elastomers.

The interior of the casing 9 serves as an ink holding portion for holding ink, and ink is injected into the interior of the casing 9. After the injection of the ink, the joint member 1 is joined to the casing 9, and the air in the casing 9 is bled through an air bleed port 14 of the joint member 1. The air bleed port 14 is then sealed with a film. The air check valve 7 here closes off the joint member 1 from the casing 9 so that air will not flow back into the casing 9 between the air bleeding process and the film welding process.

A protrusion is provided on the joint member 1, and an electrode portion 3 is provided on the protrusion. The electrode portion 3 is intended to make contact with connector pins of the recording apparatus. The cover member 2 is attached to cover the joint member 1. The cover member 2 has functions such as protecting the joint member 1, or the electrode portion 3 in particular, and serving as an insertion guide in attaching the ink cartridge 13.

The casing 9 is a portion molded by injection blowing. The casing 9 includes two layers, an outer layer 10 and an inner layer 11. The outer layer 10 is an outside layer illustrated in solid lines in Fig. 1B. The inner layer 11 is an inside layer illustrated by a broken line in Fig. 1B. The outer layer 10 and the inner layer 11 are separable from each other. As described above, the ink is held inside the inner layer 11.

In supplying the ink from the ink cartridge 13 to the recording apparatus, the ink reception pipe provided on the recording apparatus is initially inserted into the insert portion 4, and the interior of the joint member 1 is depressurized. The air check valve 7 is opened by the depressurization. The ink in the casing 9 then moves into the joint member 1 via the ink channel member 8, and is supplied to the recording apparatus via the ink reception pipe.

The ink channel member 8 includes two channels so that ink accumulating vertically below and ink located vertically above in the casing 9 can be supplied at predetermined densities. Examples of material forming the ink channel member 8 include PE and PP.

As the ink is supplied and the amount of ink held inside the inner layer 11 decreases, the inner layer 11 deforms depending on the decreased volume of the ink. The inner layer 11 collapses when the held ink is finally used up.

An air communication port 12 is formed in the outer layer 10. Air is let into between the outer layer 10 and the inner layer 11 through the air communication port 12, so that the inner layer 11 can collapse as the ink is supplied. The outer layer 10 includes an outer layer flange as its flange. The inner layer 11 includes an inner layer flange as its flange. The inner layer flange and the joint member 1 are joined by thermal welding, whereby a closed space is formed. The inner layer flange and the outer layer flange will be described in detail below.

In view of making full use of the ink, the inner layer 11 can be made of soft material. In view of flexibility, examples of the material forming the inner layer 11 can include polyolefin resins, olefin-based thermally plastic elastomers, and styrene-based thermally plastic elastomers. The inner layer 11 can be made of at least one of such materials. If the inner layer 11 and the outer layer 10 are simultaneously molded by injection blow molding, the formation material of the inner layer 11 can be one having a similar temperature range suitable for air blowing to that of the formation material of the outer layer 10. Specifically, at least either PE or PP can be used. In view of flexibility and injection blowability, linear low density polyethylene (LLDPE) in particular can be suitably used among PEs. The bending modulus of the inner layer 11 can be 1000 MPa or less, desirably 300 MPa or less.

The outer layer 10 is an outside member of the ink cartridge 13 and functions as an exterior member. The outer layer 10 can therefore have a rigidity higher than that of the inner layer 11, and can be made of material having a high rigidity. The material forming the outer layer 10 can also have high injection blowability. Specifically, a PE resin selected from a group including polyethylene terephthalate (PET), polyethylene naphthalate, or polybutylene terephthalate can be used. PET can be suitably used in particular. PET characteristically increases sharply in viscosity when stretched by air blowing. Stretched thin portions then become less stretchable while unstretched thick portions are stretchable. As a result, the entire article can be stretched to have a uniform thickness.

Next, a method for manufacturing the casing 9, which is a blown bottle, of the ink cartridge 13 will be described. The casing 9 of the ink cartridge 13 is manufactured by injection blow molding two layers of preforms including one for the outer layer 10 and one for the inner layer 11.

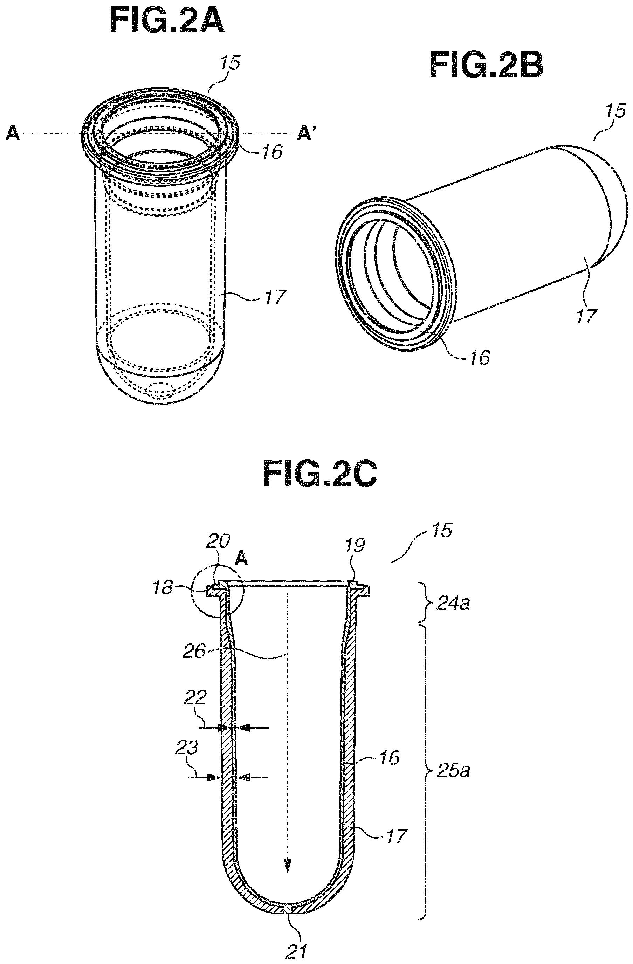

Figs. 2A to 2C illustrate a preform 15 used in molding the casing 9. Figs. 2A and 2B are views of the preform 15 from respective different angles. Fig. 2C is a sectional view of the preform 15, taken along the line A-A' of Fig. 2A. The preform 15 is a laminated preform including a stack of an inner layer preform 16 to be the inner layer 11 and an outer layer preform 17 to be the outer layer 10. The inner layer preform 16 and the outer layer preform 17 may be insert molded together or molded separately. The inner layer preform 16 and the outer layer preform 17 can be suitably molded by insert molding. The reason is that the adhesiveness (coefficient of friction) between the inner layer flange 20 and the outer layer flange 18 can be increased to further suppress deformation of the blow-molded inner layer 11 due to post-molding shrinkage. The deformation of the inner layer 11 (inner layer flange 20) will be described in detail below.

As illustrated in Fig. 2C, the preform 15 includes an unblown portion 24a and a blown portion 25a. The unblown portion 24a is a portion that does not change substantially in shape before and after injection blow molding. The blown portion 25a is a portion that is molded into a bottle shape and changes in shape before and after injection blow molding. The unblown portion 24a of the preform 15 becomes an unblown portion of the blown bottle with substantially no change in shape. The blown portion 25a of the preform 15 changes in shape and becomes a blown portion of the blown bottle.

After the preform 15 formed in two layers is prepared, the preform 15 is set on a blow carrier. The blown portion 25 of the preform 15 is then heated by heaters so that both the blown portions of the inner layer preform 16 and the outer layer preform 17 reach or exceed their glass transition temperature. The interior of the preform 15 is then stretched (elongated) in a stretching direction 26 by using a stretch rod inserted into a mold. At the same time, about 30 atmospheres of air is blown into the preform 15 to mold the preform 15 into a desired blown bottle (casing) shape.

In view of blow molding, the blown bottle (casing) can have a circular columnar (cylindrical) shape. The inner layer preform 16 and the outer layer preform 17 may be separately molded by injection blow molding and stacked afterward. Simultaneous injection blow molding can reduce the number of steps and can form a blown bottle having high volumetric efficiency.

In view of a size stretchable from a two-layer preform, the height of the blown bottle (casing) can be 40 mm or more and 350 mm or less. From a similar point of view, the width (maximum outer diameter) of the blown portion of the blown bottle can be 10 mm or more and 130 mm or less. The height of a blown bottle refers to the length of the blown bottle in the stretching direction 26 of the preform. The width of a blown bottle refers to the length of the blown bottle in a direction orthogonal to the stretching direction 26 of the preform.

The thickness of the blown portion of the blown bottle (casing) can be determined from the size of the two-layer preform 15 and that of the blow-molded container. In particular, if the two-layer blown bottle includes the outer layer 10 and the inner layer 11 that are separated, the outer layer 10 and the inner layer 11 can each have a thickness of 0.05 mm or more and 3.00 mm or less. If the outer layer 10 and the inner layer 11 are simultaneously molded by injection blow molding, the outer layer 10 can desirably have a thickness of 0.30 mm or more and 2.00 mm or less in view of strength. Similarly, if the outer layer 10 and the inner layer 11 are simultaneously molded by injection blow molding, the inner layer 11 can desirably have a thickness of 0.05 mm or more and 0.20 mm or less in view of flexibility.

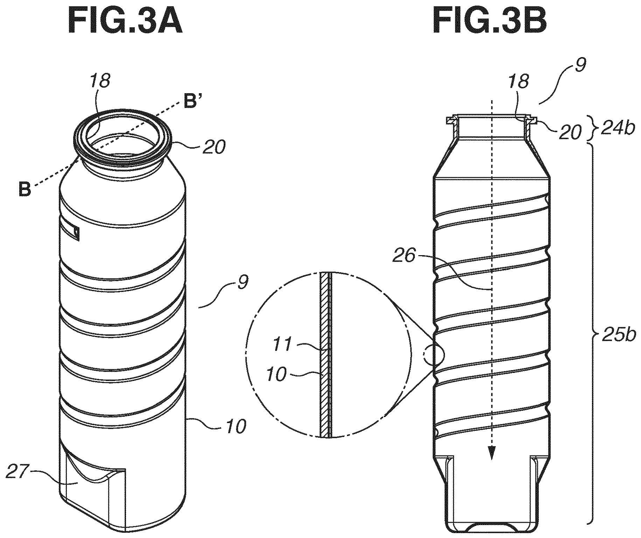

Next, the flanges provided on the casing 9 of the ink cartridge 13 will be described. Fig. 3A is a perspective view of the molded casing 9 of the ink cartridge 13. Fig. 3B is a sectional view of the casing 9, taken along the line B-B' of Fig. 3A. The casing 9 of the ink cartridge 13 includes the outer layer flange 18 and the inner layer flange 20. The outer layer flange 18 is formed on the outer layer 10. The inner layer flange 20 is formed on the inner layer 11. Both the outer layer flange 18 and the inner layer flange 20 are provided on an unblown portion 24b of the outer and inner layers 10 and 11. A flange refers to a portion protruding and extending in a direction crossing the height direction of the casing 9 (stretching direction of the preform 15).

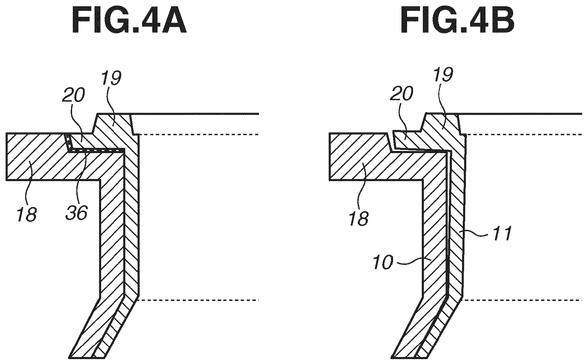

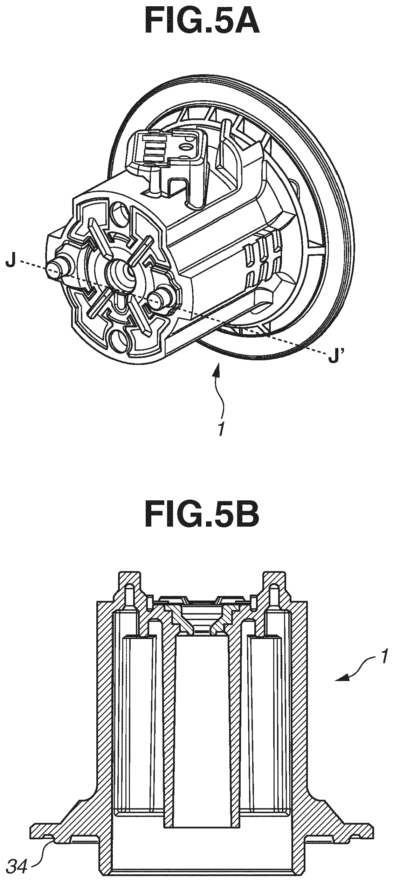

Figs. 4A and 4B are enlarged views of the flanges 18 and 20 of the casing 9 of the ink cartridge 13 (area surrounded by the circle A in Fig. 2C). As illustrated in Fig. 4A, the outer layer flange 18 can make contact with the inner layer flange 20 in a contact area 36. For injection blowing, a flange is often formed to fix the preform during injection blow molding. In the case of the ink cartridge 13 molded in the present exemplary embodiment, the flanges 18 and 20 can also be used as a fixing portion to which engaging tabs (not illustrated) of the cover member 2 are fixed, and as a welding portion to be welded to the joint member 1. A process of welding the inner layer flange 20 to the joint member 1 will be described. Figs. 5A and 5B illustrate the joint member 1. Fig. 5B is a sectional view of the joint member 1, taken along the line J-J' of Fig. 5A. The joint member 1 includes a welding rib 34. The inner layer flange 20 includes a welding rib 19. The welding ribs 19 and 34 are heated and joined to each other to complete welding. In the case of laser welding, the inner layer flange 20 can be welded to the joint member 1 without the welding rib 19. To obtain uniform welding strength, however, the welding rib 19 can be formed even in the case of laser welding. The welding method is not limited in particular as long as the inner layer flange 20 and the joint member 1 can be welded. An example of using infrared welding will be described. Infrared welding can selectively heat the welding ribs 19 and 34 by using masks, and can thus reduce a temperature increase in surrounding areas, compared to hot plate welding. In particular, such a welding method can be suitably used for the ink cartridge 13 described here because functional parts such as the ink channel member 8 are arranged near the welding ribs 19 and 34. Unlike hot plate welding, infrared welding needs absorption of infrared rays. Materials then can be colored in black for short-time welding. If the welding ribs 19 and 34 are not welded at proper positions, ink leakage from the welded portion can occur due to insufficient heating or pressing of the ribs or a reduced welding area.

Injection blow molding is a molding method for molding a desired shape by longitudinally stretching a heated preform with a stretch rod and then laterally stretching and inflating the preform with pressurized air. If a material having a low heat resistance or low crystallinity is subjected to injection blow molding, deformation can occur due to post-molding shrinkage from stress relaxation and a needed shape can fail to be achieved. Now, a deformation that can occur in injection blow molding of a two-layer preform due to post-molding shrinkage will be described.

Fig. 4B illustrates how the inner layer flange 20 of Fig. 4A exfoliates from the outer layer flange 18 and the inner layer flange 20 is deformed. The inner layer 11 is less likely to be heat set after injection blowing, and can thus be deformed by post-molding shrinkage so that the inner layer flange 20 is drawn into the casing 9 (in Fig. 4B, to the right) after the injection blowing. If the foregoing welding is performed in such a state, the inner layer flange 20 can be welded at an improper position and result in weak welding or a leakage.

Post-molding shrinkage can be suppressed by using materials having a high heat resistance and high crystallinity. However, such materials are not suitable as materials for forming the inner layer of an ink cartridge. Moreover, injection blowing involves longitudinal stretching and is thus susceptible to shrinkage, compared to direct blowing.

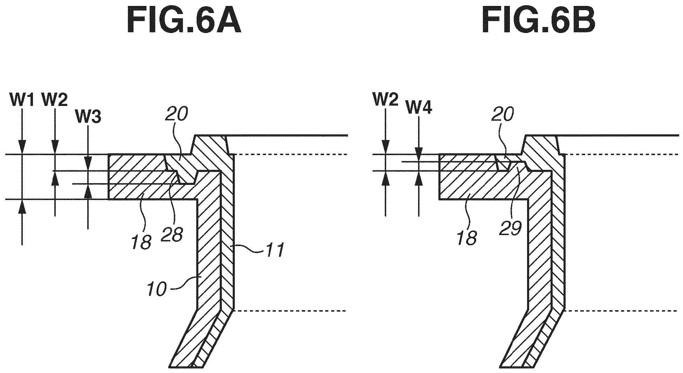

In the present exemplary embodiment, a protrusion is formed on either one of the inner layer flange 20 and the outer layer flange 18, and a recess is formed in the other. The protrusion is fitted to the recess, whereby the flange deformation is suppressed. A configuration illustrated in Fig. 6A will be described as an example. As illustrated in Fig. 6A, a recess 28 is formed in the outer layer flange 18 in the contact area between the inner layer flange 20 and the outer layer flange 18. A protrusion of the inner layer flange 20 (the portion of the inner layer flange 20 lying inside the recess 28) is fitted to the recess 28 of the outer layer flange 18. If the preform 15 is molded by insert molding the inner layer 11 on the outer layer flange 18 having the recess 28, the inner layer flange 20 is molded to have a protruded shape that fills the recess 28. The provision of the recess 28 can suppress deformation of the inner layer flange 20 since the recess 28 plays the role of a wall against the foregoing movement of the inner layer flange 20. The insert molding of the inner layer 11 on the outer layer flange 18 having the recess 28 also enhances the adhesiveness (coefficient of friction) between the inner layer flange 20 and the outer layer flange 18, and can thus further suppress deformation.

In injection blowing, stretching and air blowing are often performed with the flange of a preform fixed by a jig. In such a case, the flange needs to have strength not to cause deformation from a stress during stretching or during air blowing. The thickness of the outer layer flange 18 (the length of the portion denoted by W1 in Fig. 6A) can thus be 1.5 mm or more. However, too thick a flange facilitates the occurrence of sink marks (phenomenon in which the surface of the molded article depresses) or voids (phenomenon in which air bubbles occur inside the molded article). The thickness of the outer layer flange 18 can therefore be 5.0 mm or less.

Next, the depth of the recess 28 will be described. As illustrated in Fig. 6A, if the recess 28 is formed in the outer layer flange 18, the outer layer flange 18 becomes thinner accordingly and a short becomes more likely to occur during the molding of the inner layer preform 16. The recess 28 therefore needs to have an appropriate depth. Specifically, the thickness of the outer layer flange 18 at a position opposed to the recess 28 (length obtained by subtracting a thickness W2 of the inner layer flange 20 and a depth W3 of the recess 28 from the thickness W1 of the outer layer flange 18) can be 0.5 mm or more.

Fig. 6B illustrates a configuration in which a protrusion 29 is formed on the outer layer flange 18. The protrusion 29 fits to a recess in the inner layer flange 20. Even in such a case, as described in Fig. 6A, deformation of the inner layer flange 20 can be suppressed since the protrusion 29 plays the role of a wall against the movement of the inner layer flange 20 due to deformation. If the protrusion 29 is provided, the inner layer flange 20 tends to have a smaller thickness, but the inner layer flange 20 can be formed to have an appropriate thickness. Specifically, the thickness of the inner layer flange 20 at a position opposed to the protrusion 29 (length obtained by subtracting a height W4 of the protrusion 29 from the thickness W2 of the inner layer flange 20) can be 0.5 mm or more.

As described above, the outer layer flange 18 can be provided with either the recess 28 or the protrusion 29. To prevent formation of a thin portion in the flanges, the recess 28 can be formed if the length obtained by subtracting the thickness W2 of the inner layer flange 20 from the thickness W1 of the outer layer flange 18 is greater than the thickness W2 of the inner layer flange 20. The protrusion 29 can be formed if the length is smaller than the thickness W2 of the inner layer flange 20.

Since the recess 28 and the protrusion 29 play the role of a wall against deformation of the inner layer flange 20, the recess 28 and the protrusion 29 can be formed at right angles to the direction of deformation as much as possible. Specifically, the inner walls of the recess 28 and the outer walls of the protrusion 29 can be extended at angles of ±80° with respect to the horizontal direction of Figs. 6A and 6B (the extending direction of the flanges 18 and 20, or a direction orthogonal to the stretching direction of the preform 15). The inner walls of the recess 28 and the outer walls of the protrusion 29 can have a taper angle of 80°-100° or less.

The present exemplary embodiment will be described in more detail below by using examples.

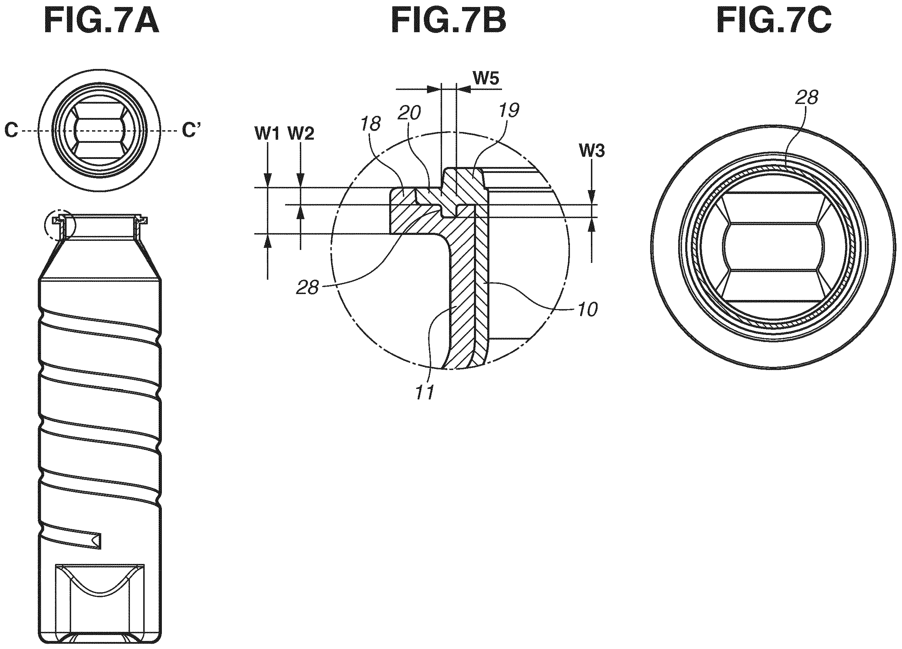

A configuration of example 1 will be described with reference to Figs. 7A to 7C. Fig. 7A illustrates a top view and a sectional view of the casing 9 of the ink cartridge 13. Fig. 7B is an enlarged view of the flanges 18 and 20 in a C-C' section. Fig. 7C is a view of the outer layer flange 18 seen in the height direction of the flanges 18 and 20 (stretching direction, or a direction from above to below in Fig. 7B).

In example 1, LLDPE was used as the material for forming the inner layer 11, and PET was used as the material for forming the outer layer 10. A two-layer preform 15 including a stack of two such layers was initially formed. The two-layer preform 15 was formed so that the inner layer preform 16 to be the inner layer 11 had a thickness of 1.0 mm and the outer layer preform 17 to be the outer layer 10 had a thickness of 2.8 mm. The height of the outer layer preform 17 was 90.0 mm.

Since the flanges 18 and 20 are provided on the unblown portions, the flanges 18 and 20 do not change in size whether in the preform 15 state or in the casing 9 state after being molded into a blown bottle. The thicknesses of the flanges 18 and 20 of the preform 15 will be described with reference to the enlarged view of the flanges 18 and 20 of the casing 9 in Fig. 7B. The outer layer flange 18 of the preform 15 had a thickness W1 of 2.8 mm, and the inner layer flange 20 had a thickness W2 of 1.0 mm. The recess 28 was formed in the outer layer flange 18. The depth W3 of the recess 28 was 0.8 mm. The width W5 of the recess 28 was 1.0 mm. The inner layer flange 20 had a protrusion having the same size as that of the recess 28, and the protrusion was fitted to the recess 28. The recess 28 and the protrusion are extended in the height direction of the preform 15, and form an angle of 90° with respect to the extending direction of the outer layer flange 18 and the inner layer flange 20. As illustrated in Fig. 7C, the recess 28 was formed to have an annular shape when seen in the height direction of the flanges 18 and 20. A welding rib 19 having a width (horizontal length in Fig. 7B) of 2.0 mm and a height (vertical length in Fig. 7B) of 1.2 mm was formed on the inner layer flange 20.

Using such a two-layer preform 15, injection blow molding was performed in an injection blow molding machine (FRB-1, manufactured by Frontier, Inc.). For the injection blow molding, the two-layer preform 15 was initially rotated and heated from outside by using halogen heaters. Specifically, six heaters were arranged at positions 20 mm from the surface of the outer layer preform 17 at pitches of 15 mm, and the preform 15 was heated for 50 seconds. The output values of the halogen heaters were adjusted so that the temperature of the outer layer preform 17 after the heating process was controlled to be 70°C or more and 160°C or less. The molding temperature was checked by measuring the temperature of the two-layer preform 15 immediately after the heating (i.e., the temperature of the outer layer preform 17 immediately before injection blowing) with a noncontact temperature sensor.

The heated preform 15 was inserted into a mold, and then the mold was closed and the interior of the preform 15 was axially stretched by a stretch rod. At the same time, 30 atmospheres of air was blown in to mold the entire article into a bottle shape. In such a manner, the casing 9, which was a blown bottle, of the ink cartridge 13 was formed. A recess and a protrusion that fits thereto were formed in/on the flanges 18 and 20. Both the recess and the protrusion were extended along the height direction of the casing 9, and formed an angle of 90° with respect to the extending direction of the outer layer flange 18 and the inner layer flange 20.

The molded casing 9 had a diameter of 57.0 mm and a height of 200.0 mm. An average thickness of the outer layer 10 in the blown portion after blow molding (measured at 10 arbitrary distributed points) was 0.5 mm. An average thickness of the inner layer 11 in the blown portion (measured at 10 arbitrary distributed points) was 0.1 mm.

The molded casing 9 of the ink cartridge 13 was visually observed to check the state of the inner layer flange 20. No deformation was observed in the inner layer flange 20, and a favorable casing was obtained.

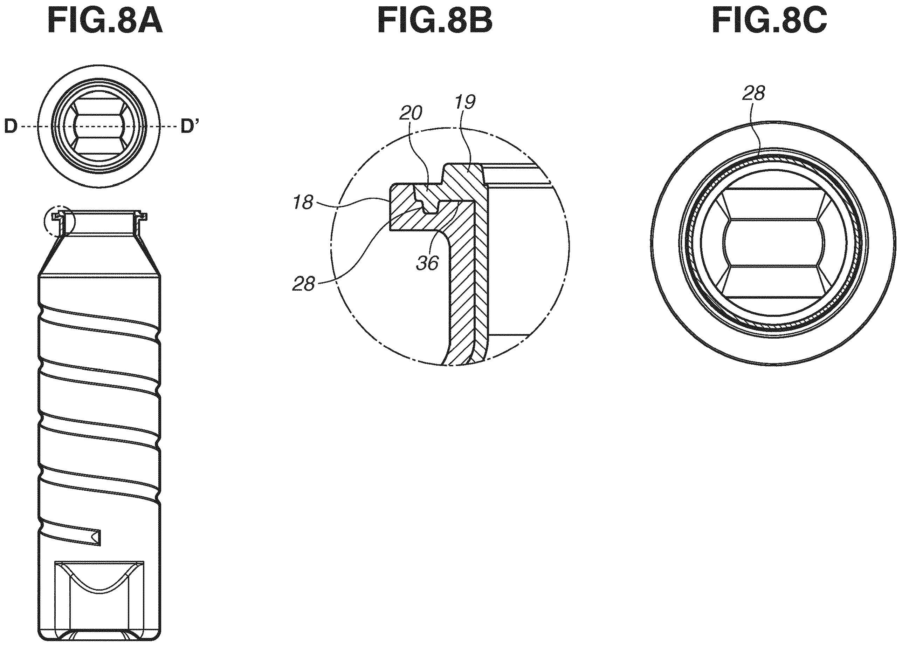

A configuration of example 2 will be described with reference to Figs. 8A to 8C. Fig. 8A illustrates a top view and a sectional view of the casing 9 of the ink cartridge 13. Fig. 8B is an enlarged view of the flanges 18 and 20 in a D-D' section. Fig. 8C is a view of the outer layer flange 18 seen in the height direction of the flanges 18 and 20 (stretching direction).

In example 2, the recess 28 in the outer layer flange 18 was arranged at a position shifted from the welding rib 19 formed on the inner layer flange 20 with respect to the height direction of the casing 9 (stretching direction of the preform 15) (at a position such that the centers of the recess 28 and the welding rib 19 does not overlap even if extended in the height direction of the casing 9). In other respects, the casing 9 of the ink cartridge 13 was molded in a similar manner to example 1.

The molded casing 9 of the ink cartridge 13 was visually observed to check the state of the inner layer flange 20. No deformation was observed in the inner layer flange 20, and a favorable casing was obtained. Fewer sink marks were observed on the welding rib 19 than in example 1.

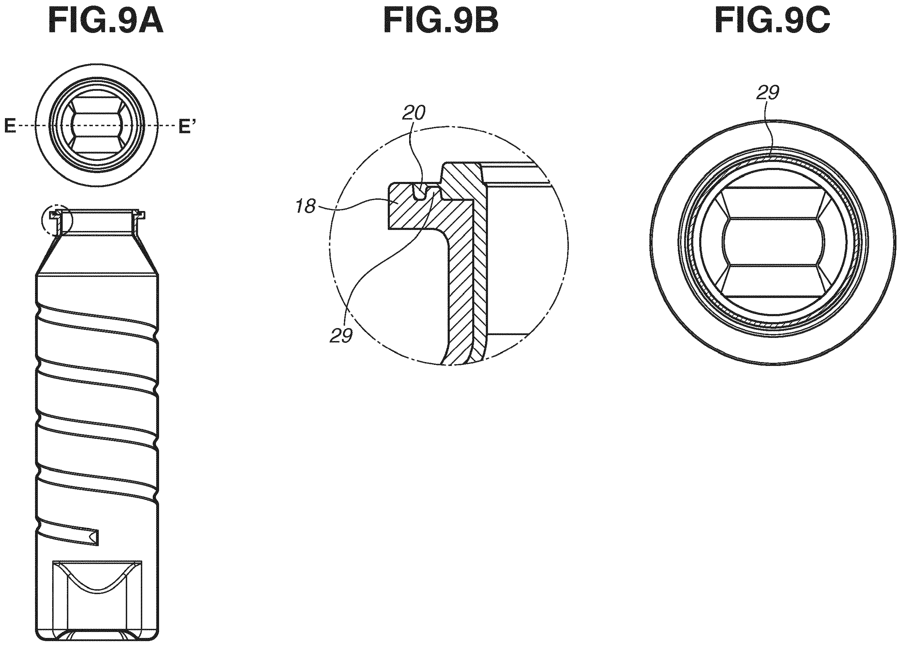

A configuration of example 3 will be described with reference to Figs. 9A to 9C. Fig. 9A illustrates a top view and a sectional view of the casing 9 of the ink cartridge 13. Fig. 9B is an enlarged view of the flanges 18 and 20 of Fig. 9A in an E-E' section. Fig. 9C is a view of the outer layer flange 18 seen in the height direction of the flanges 18 and 20 (stretching direction).

In example 3, the protrusion 29 was formed on the outer layer flange 18 instead of the recess 28. A recess to which the protrusion 29 is fitted was formed in the inner layer flange 20. In other respects, the casing 9 of the ink cartridge 13 was molded in a similar manner to example 2.

The molded casing 9 of the ink cartridge 13 was visually observed to check the state of the inner layer flange 20. No deformation was observed in the inner layer flange 20, and a favorable casing was obtained.

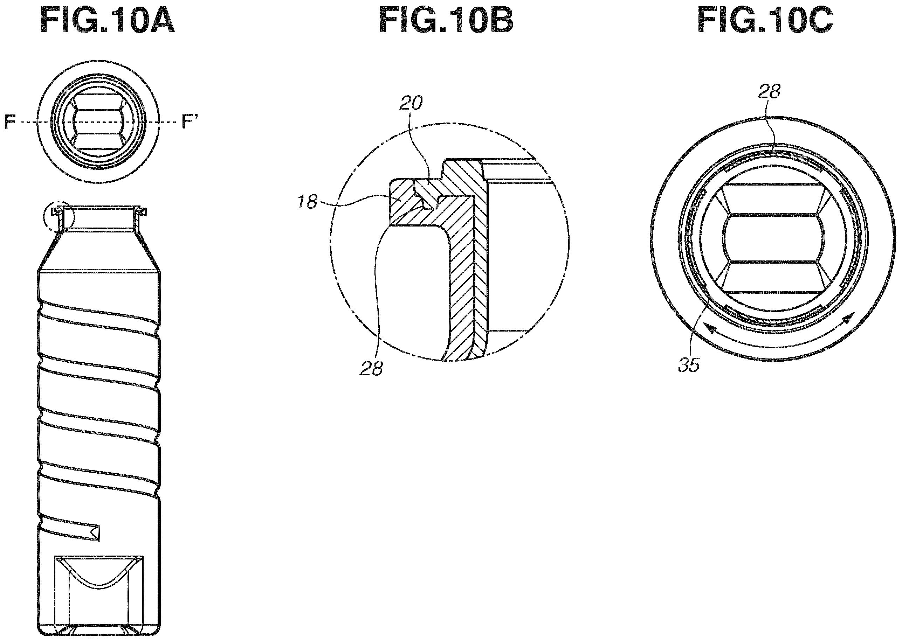

A configuration of example 4 will be described with reference to Figs. 10A to 10C. Fig. 10A is a top view and a sectional view of the casing 9 of the ink cartridge 13.

Fig. 10B is an enlarged view of the flanges 18 and 20 in an F-F' section. Fig 10C is a view of the outer layer flange 18 seen in the height direction of the flanges 18 and 20 (stretching direction).

As illustrated in Fig. 10C, in example 4, the recess 28 forming an annular shape when the outer layer flange 18 is seen in the height direction was partially segmented in shape. In other respects, the casing 9 of the ink cartridge 13 was molded in a similar manner to example 1.

The molded casing 9 of the ink cartridge 13 was visually observed to check the state of the inner layer flange 20. No deformation was observed in the inner layer flange 20, and a favorable casing was obtained.

In example 4, the partial segmentation of the recess 28 provided walls 35 for stopping movement in a rotational direction about the stretching direction 26 of the preform 15. Movement of the outer layer flange 18 in the rotational direction can thus also be restricted.

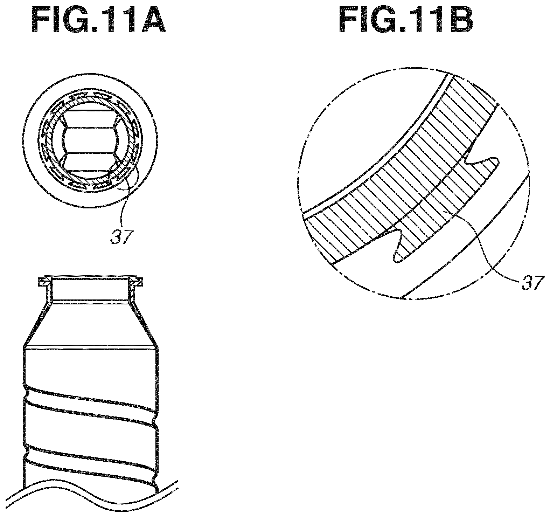

A configuration of example 5 will be described with reference to Figs. 11A and 11B. Fig. 11A illustrates a top view and a sectional view of the casing 9 of the ink cartridge 13. Fig. 11B is a view of the flanges 18 and 20 seen in the height direction of the flanges 18 and 20 (stretching direction). As illustrated in Fig. 11B, in example 5, recesses 37 were formed in the outer layer flange 18 in the contact area between the outer layer flange 18 and the inner layer flange 20 as seen in the height direction of the casing 9 (flanges 18 and 20), instead of the recess 28 according to example 1. The inner layer flange 20 was provided with protrusions having the same size as that of the recesses 37, and the protrusions were fitted to the recesses 37. That is, the bumps and dents of the recesses 37 and the protrusions were visible when the casing 9 was seen in the height direction. The recesses 37 and the protrusions were formed not in an annular shape but in the shape illustrated in Fig. 11B. In other respects, the casing 9 of the ink cartridge 13 was molded in a similar manner to example 1.

The molded casing 9 of the ink cartridge 13 was visually observed to check the state of the inner layer flange 20. No deformation was observed in the inner layer flange 20, and a favorable casing was obtained.

According to the configuration of example 5, surfaces parallel to the height direction of the casing 9 (stretching direction) can be formed without forming a difference in level in the height direction (stretching direction) by a protrusion or a recess. Deformation of the inner layer flange 20 can thus be suppressed. Such a configuration is effective if sufficient thicknesses are difficult to provide in the height direction of the flanges 18 and 20.

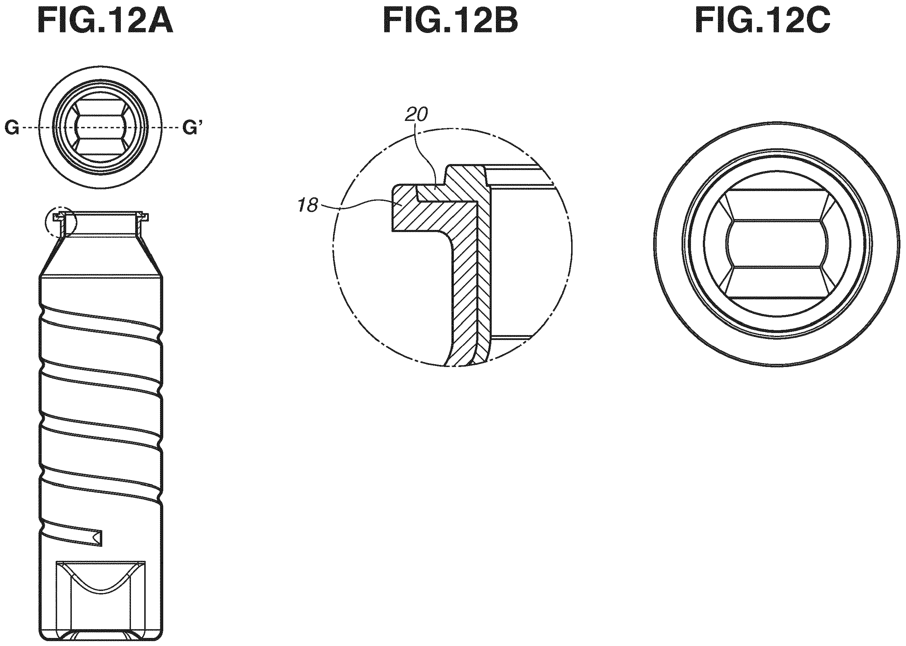

A configuration of a comparative example will be described with reference to Figs. 12A to 12C. Fig. 12A illustrates a top view and a sectional view of the casing 9 of the ink cartridge 13. Fig. 12B is an enlarged view of the flanges 18 and 20 in a G-G' section. Fig. 12C is a view of the outer layer flange 18 seen in the height direction of the flanges 18 and 20 (stretching direction).

In the comparative example, neither the recess 28 nor a protrusion that fits thereto was formed. In other respects, the casing 9 of the ink cartridge 13 was molded in a similar manner to example 1.

The molded casing 9 of the ink cartridge 13 was visually observed to check the state of the inner layer flange 20. The inner layer flange 20 was found to be deformed and separated from the outer layer flange 18.

A blown bottle includes at least two layers including an inner layer and an outer layer, wherein the inner layer includes an inner layer flange, the outer layer includes an outer layer flange, and wherein a protrusion is formed on either one of the inner layer flange or the outer layer flange, a recess is formed in the other, and the protrusion is fitted to the recess.

## Claims

1. A blown bottle (9) blow molded from a preform (15), comprising at least two layers including an inner layer (11) and an outer layer (12),
wherein the inner layer (11) includes an inner layer flange (20) and the outer layer (12) includes an outer layer flange (18), and
wherein a protrusion (29) is formed on either one of the inner layer flange (20) or the outer layer flange (18), a recess (28) is formed in the other, and the protrusion (29) is fitted to the recess (28),
wherein the protrusion (29) is formed on the inner layer flange (20), and the recess (28) is formed in the outer layer flange (18), and **characterized in that**
the recess (28) is formed in a partially segmented annular shape if the blown bottle (9) is seen in a height direction thereof,
the partial segmentation of the recess (28) is adapted to provide walls (35) for stopping movement in a rotational direction about a stretching direction (26) of the preform (15) and
movement of the outer layer flange (18) in the rotational direction is also restricted.

2. The blown bottle (9) according to claim 1, wherein the outer layer flange (18) has a thickness of 0.5 mm or more at a position opposed to the protrusion (29).

3. The blown bottle (9) according to claim 1, wherein the protrusion (29) is formed on the outer layer flange (18), and the recess (28) is formed in the inner layer flange (20).

4. The blown bottle (9) according to claim 3, wherein the inner layer flange (20) has a thickness of 0.5 mm or more at a position opposed to the protrusion (29).

5. The blown bottle (9) according to any one of claims 1 to 4, wherein the outer layer (12) has a rigidity higher than that of the inner layer (11).

6. The blown bottle (9) according to any one of claims 1 to 5, wherein the inner layer (11) is made of at least one of a polyolefin resin, an olefin-based thermally plastic elastomer, and a styrene-based thermally plastic elastomer.

7. The blown bottle (9) according to any one of claims 1 to 5, wherein the inner layer (11) is made of polyethylene or polypropylene.

8. The blown bottle (9) according to any one of claims 1 to 7, wherein the outer layer (12) is made of a polyester resin selected from a group comprising a polyethylene terephthalate, a polyethylene naphthalate, or a polybutylene terephthalate.

9. The blown bottle (9) according to any one of claims 1 to 8, wherein an inner wall of the recess (28) and an outer wall of the protrusion (29) are extended at an angle of 80°-100° with respect to an extending direction of the outer layer flange (18) and the inner layer flange (20).

10. The blown bottle (9) according to any one of claims 1 to 9, wherein the recess (28) and the protrusion (29) are extended along a height direction of the blown bottle (9).

11. The blown bottle (9) according to any one of claims 1 to 10,
wherein a welding rib (19) is formed on the inner layer flange (20), and
wherein the welding rib (19) and the recess (28) are arranged at positions shifted in a height direction of the blown bottle (9).

12. The blown bottle (9) according to any one of claims 1 to 11, wherein the recess (28) is formed in an annular shape if the blown bottle (9) is seen in a height direction thereof.

13. The blown bottle (9) according to any one of claims 1 to 9, wherein the recess (28) and the protrusion (29) are formed so that a bump and a dent of the recess (28) and the protrusion (29) are visible if the blown bottle (9) is seen in a height direction thereof.

## Patentansprüche

1. Geblasene Flasche (9), die aus einer Vorform (15) blasgeformt ist, die mindestens zwei Lagen aufweist, die eine Innenlage (11) und eine Außenlage (12) aufweisen,
wobei die Innenlage (11) einen Innenlagenflansch (20) aufweist und die Außenlage (12) einen Außenlagenflansch (18) aufweist und
wobei ein Vorsprung (29) an einem von dem Innenlagenflansch (20) oder dem Außenlagenflansch (18) ausgebildet ist, eine Vertiefung (28) in dem anderen ausgebildet ist, und der Vorsprung (29) in die Vertiefung (28) eingepasst ist,
wobei der Vorsprung (29) an dem Innenlagenflansch (20) ausgebildet ist und die Vertiefung (28) in dem Außenlagenflansch (18) ausgebildet ist, und **dadurch gekennzeichnet, dass**
die Vertiefung (28) in einer teilweise segmentierten Ringform ausgebildet ist, wenn die geblasene Flasche (9) in einer Höhenrichtung davon betrachtet wird,
die teilweise Segmentierung der Vertiefung (28) angepasst ist, um Wände (35) zum Stoppen einer Bewegung in einer Drehrichtung um eine Ausdehnungsrichtung (26) der Vorform (15) bereitzustellen, und
eine Bewegung des Außenlagenflanschs (18) in der Drehrichtung zudem beschränkt ist.

2. Geblasene Flasche (9) nach Anspruch 1, wobei der Außenlagenflansch (18) an einer Position, die dem Vorsprung (29) gegenüberliegt, eine Dicke von 0,5 mm oder mehr hat.

3. Geblasene Flasche (9) nach Anspruch 1, wobei der Vorsprung (29) an dem Außenlagenflansch (18) ausgebildet ist und die Vertiefung (28) in dem Innenlagenflansch (20) ausgebildet ist.

4. Geblasene Flasche (9) nach Anspruch 3, wobei der Innenlagenflansch (20) an einer Position, die dem Vorsprung (29) gegenüberliegt, eine Dicke von 0,5 mm oder mehr hat.

5. Geblasene Flasche (9) nach einem der Ansprüche 1 bis 4, wobei die Außenlage (12) eine Steifigkeit hat, die höher ist als jene der Innenlage (11).

6. Geblasene Flasche (9) nach einem der Ansprüche 1 bis 5, wobei die Innenlage (11) aus mindestens einem von einem Polyolefinharz, einem olefinbasierten thermoplastischen Elastomer und einem styrolbasierten thermoplastischen Elastomer gemacht ist.

7. Geblasene Flasche (9) nach einem der Ansprüche 1 bis 5, wobei die Innenlage (11) aus Polyethylen oder Polypropylen gemacht ist.

8. Geblasene Flasche (9) nach einem der Ansprüche 1 bis 7, wobei die Außenlage (12) aus einem Polyesterharz gemacht ist, das aus einer Gruppe ausgewählt ist, die ein Polyethylenterephthalat, ein Polyethylennaphthalat oder ein Polybutylenterephthalat aufweist.

9. Geblasene Flasche (9) nach einem der Ansprüche 1 bis 8, wobei eine Innenwand der Vertiefung (28) und eine Außenwand des Vorsprungs (29) bezüglich einer Erstreckungsrichtung des Außenlagenflanschs (18) und des Innenlagenflanschs (20) bei einem Winkel von 80° bis 100° erstreckt sind.

10. Geblasene Flasche (9) nach einem der Ansprüche 1 bis 9, wobei die Vertiefung (28) und der Vorsprung (29) entlang einer Höhenrichtung der geblasenen Flasche (9) erstreckt sind.

11. Geblasene Flasche (9) nach einem der Ansprüche 1 bis 10,
wobei eine Schweißrippe (19) an dem Innenlagenflansch (20) ausgebildet ist und
wobei die Schweißrippe (19) und die Vertiefung (28) an Positionen angeordnet sind, die in einer Höhenrichtung der geblasenen Flasche (9) versetzt sind.

12. Geblasene Flasche (9) nach einem der Ansprüche 1 bis 11, wobei die Vertiefung (28) in einer Ringform ausgebildet ist, wenn die geblasene Flasche (9) in einer Höhenrichtung davon betrachtet wird.

13. Geblasene Flasche (9) nach einem der Ansprüche 1 bis 9, wobei die Vertiefung (28) und der Vorsprung (29) so ausgebildet sind, dass eine Beule und eine Delle der Vertiefung (28) und des Vorsprungs (29) sichtbar sind, wenn die geblasene Flasche (9) in einer Höhenrichtung davon betrachtet wird.

## Revendications

1. Bouteille soufflée (9) moulée par soufflage à partir d'une préforme (15), comprenant au moins deux couches comprenant une couche intérieure (11) et une couche extérieure (12),
dans laquelle la couche intérieure (11) comprend un rebord de couche intérieure (20) et la couche extérieure (12) comprend un rebord de couche extérieure (18), et
dans laquelle une saillie (29) est formée sur l'un ou l'autre du rebord de couche intérieure (20) ou du rebord de couche extérieure (18), un évidement (28) est formé dans l'autre rebord, et la saillie (29) est ajustée dans l'évidement (28),
dans laquelle la saillie (29) est formée sur le rebord de couche intérieure (20), et l'évidement (28) est formé dans le rebord de couche extérieure (18), et
**caractérisée en ce que**
l'évidement (28) est façonné avec une forme annulaire partiellement segmentée si la bouteille soufflée (9) est observée dans sa direction de hauteur,
la segmentation partielle de l'évidement (28) est conçue pour fournir des parois (35) destinées à interrompre un mouvement dans un sens de rotation dans un sens d'étirement (26) de la préforme (15), et
un mouvement du rebord de couche extérieure (18) dans le sens de rotation est également limité.

2. Bouteille soufflée (9) selon la revendication 1, dans laquelle le rebord de couche extérieure (18) a une épaisseur supérieure ou égale à 0,5 mm au niveau d'une position opposée à la saillie (29).

3. Bouteille soufflée (9) selon la revendication 1, dans laquelle la saillie (29) est formée sur le rebord de couche extérieure (18), et l'évidement (28) est formé dans le rebord de couche intérieure (20).

4. Bouteille soufflée (9) selon la revendication 3, dans laquelle le rebord de couche intérieure (20) a une épaisseur supérieure ou égale à 0,5 mm au niveau d'une position opposée à la saillie (29).

5. Bouteille soufflée (9) selon l'une quelconque des revendications 1 à 4, dans laquelle la couche extérieure (12) a une rigidité supérieure à celle de la couche intérieure (11).

6. Bouteille soufflée (9) selon l'une quelconque des revendications 1 à 5, dans laquelle la couche intérieure (11) est constituée d'au moins l'un parmi une résine poly-oléfinique, un élastomère thermoplastique à base d'oléfine, et un élastomère thermoplastique à base de styrène.

7. Bouteille soufflée (9) selon l'une quelconque des revendications 1 à 5, dans laquelle la couche intérieure (11) est constituée de polyéthylène ou de polypropylène.

8. Bouteille soufflée (9) selon l'une quelconque des revendications 1 à 7, dans laquelle la couche extérieure (12) est constituée d'une résine polyester sélectionnée dans un groupe comprenant un poly(téréphtalate d'éthylène), un poly(naphtalate d'éthylène), ou un poly(téréphtalate de butylène).

9. Bouteille soufflée (9) selon l'une quelconque des revendications 1 à 8, dans laquelle une paroi intérieure de l'évidement (28) et une paroi extérieure de la saillie (29) s'étendent à un angle de 80° à 100° par rapport à une direction d'étendue du rebord de couche extérieure (18) et du rebord de couche intérieure (20).

10. Bouteille soufflée (9) selon l'une quelconque des revendications 1 à 9, dans laquelle l'évidement (28) et la saillie (29) s'étendent dans une direction de hauteur de la bouteille soufflée (9).

11. Bouteille soufflée (9) selon l'une quelconque des revendications 1 à 10,
dans laquelle une nervure de soudage (19) est formée sur le rebord de couche intérieure (20), et
dans laquelle la nervure de soudage (19) et l'évidement (28) sont disposés au niveau de positions décalées dans une direction de hauteur de la bouteille soufflée (9).

12. Bouteille soufflée (9) selon l'une quelconque des revendications 1 à 11, dans laquelle l'évidement (28) est façonné avec une forme annulaire si la bouteille soufflée (9) est observée dans sa direction de hauteur.

13. Bouteille soufflée (9) selon l'une quelconque des revendications 1 à 9, dans laquelle l'évidement (28) et la saillie (29) sont formés de sorte qu'une bosse et un enfoncement de l'évidement (28) et de la saillie (29) soient visibles si la bouteille soufflée (9) est observée dans sa direction de hauteur.
